# EUROPEAN PATENT SPECIFICATION

(11) **EP 0 675 455 B1**
(45) Date of publication and mention of the grant of the patent: **15.09.2004**
(21) Application number: 95104118.5
(22) Date of filing: 21.03.1995
(51) Int. Cl.: G06K 7/01, G06K 19/02, G06K 7/00

(54) **Mechanism for retaining an electronically readable card in an electronic device**
Festhalte-Mechanismus für elektronisch lesbare Karten in einem elektronischen Gerät
Mécanisme de retenue d'une carte lisible électroniquement dans un dispositif électronique

(30) Priority: 31.03.1994 US 220843
(43) Date of publication of application: 04.10.1995
(73) Proprietor: THOMSON CONSUMER ELECTRONICS, INC., Indianapolis, IN 46206 (US)
(72) Inventor: Ramspacher, Robert James, Fishers / IN (US); Freeman, Thomas Edward, New Whiteland / IN (US)
(74) Representative: Kohrs, Martin

(56) References cited:
- US-A- 4 192 422
- US-A- 4 814 593
- US-A- 5 276 317

## Description

This invention relates generally to pay-to-view television and particularly to a mechanism for retaining an electronically readable card in a pay to view television receiver.

### Background

In pay-to-view television a so-called "smart card" is inserted into the television receiver prior to viewing the intended program. The insertion of the card accomplishes several functions, one of which is the identification of the user as an authorized user. Another function is the billing of the proper viewer of the selected pay-for-view program. Problems can arise with such cards because they can unintentionally fall out, or be removed by children or other unintended person, and as a consequence the cards often get lost. There is a need for a mechanism for retaining the smart card in the television receiver in a snug fashion which enables it to be accurately read and which prevents it from accidentally falling out or being inadvertently removed by children. The invention fulfills these needs.

The document US-A-5 276 317 discloses a housing or compartment for smart cards, made of two parts. A first part of the compartment is secured to the card, leaving an area of the card exposed for insertion into the card reader. A mating second part of the compartment can be attached to the first part to form a storage wallet around the card when removed from the reader.

The document US-A-4 814 593 discloses a reader with a movable part at the card insertion opening, enclosing a collar around a protruding end of the card during use and being movable to allow the user to grasp and retrieve the card after use.

### Summary

A mechanism for retaining an electronically readable card in an electronic device includes a bezel having an opening for inserting and holding the card in the electronic device. A resilient clip, which is dimensioned and configured to snap into the opening, includes a slit and has a detent member. A substantially V-shaped resilient retainer is dimensioned to engage one portion of the card while the remainder of the card remains exposed for electronic reading purposes. The resilient retainer includes a second detent member which engages the first detent member the projection as the retainer enters the slit during insertion of the card into the electronic device, to firmly hold the resilient retainer in the electronic device.

In particular, the invention concerns a mechanism for retaining a smart card while the smart card is in use in an electronic device, the mechanism being characterized by
a clip at an opening of the electronic device, with a slit to receive the smart card, the clip comprising at least a first detent member; and
a substantially V-shaped resilient retainer dimensioned to engage against and to hold one portion of said smart card while permitting contact in the electronic device with another portion of the smart card containing contacts for reading the smart card, said retainer including at least one second detent member that snaps into engagement with the first detent member such that the retainer is biased to firmly hold and protect the smart card when the retainer, engaging the smart card, is snapped into place for using the smart card in the electronic device.

### Brief Description of the Drawings

FIGURE 1 is a cross section of a preferred embodiment.
FIGURE 2 shows an embodiment of a resilient V-shaped retainer in detail.
FIGURE 3 is another embodiment of the resilient V-shaped retainer.
FIGURE 4 is a cross section of another preferred embodiment, shown partially broken away.

### Detailed Description

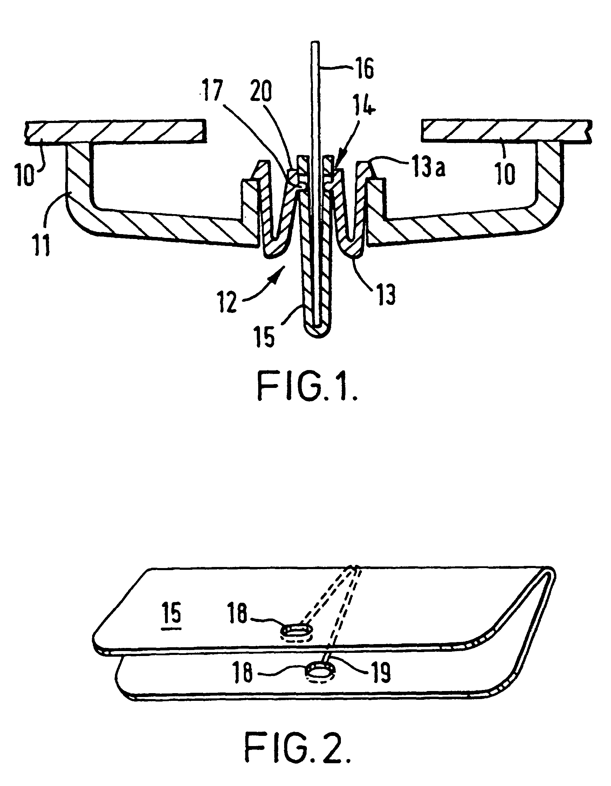

In FIGURE 1 a bezel 11 includes an opening 12 and is permanently affixed to a television receiver 10, shown broken away, which can be used to view pay-to-view television programs. A resilient clip 13 is configured to conform to the shape of the opening 12 and is dimensioned to snap-fit into the opening. The clip is held in the bezel 11 by lips 13a. Resilient clip 13 includes a longitudinal slit 14. The slit 14 is dimensioned in length and width to snugly receive a V-shaped resilient retainer 15 which is used to hold the "smart card" 16 in the television receiver. The retainer 15 firmly engages the full length of the card 16 (not shown). The cross-sectional width of the resilient retainer 15 is selected to engage only that portion of the thickness of the card 16 required to ensure that the card cannot accidentally fall from the receiver, or be inadvertently removed by a small child or some other person who is not intended to remove the card. A substantial portion of the width of the smart card 16 remains uncovered by resilient retainer 15 and extends into the receiver to be read by an electronic mechanism of known type to identify the receiver, bill the appropriate customer and what ever other functions are programmed onto the card. As shown in FIGURE 2, resilient retainer 15 includes apertures 18 on both of the sides, forming the "V" shape. Resilient clip 13 includes projections 17 (Figure 1) which engage the apertures 18 to firmly hold the resilient retainer 15 and smart card 16 in the desired position. The thicknesses of retainer 15, card 16 and the width of slit 14 are selected so that clip 13 abuttingly biases the retainer 15 against the card 16 to firmly hold the card in the holder 11. A V-shape spring 19 can be embedded in or arranged in the resilient retainer 15 to increase the resilience of the retainer.

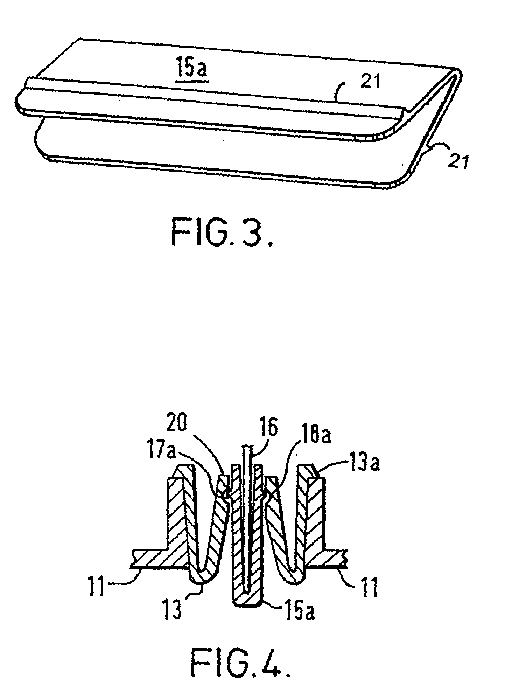

In FIGURE 3 the detent member for the resilient V-shaped retainer is composed of ribs 21 extending along the length of both sides of the retainer 15a. The ribs 21 engage the edge 20 of resilient clip 13 to hold the resilient retainer 15a in the TV receiver. In this embodiment, the ribs 21 and edge 20 replace the projections 17 and apertures 18.

The FIGURE 4 embodiment is similar to the FIGURE 1 embodiment. However, resilient clip 13 includes apertures 18a (shown as blind holes) and resilient retainer 15a includes projections 17a.

## Claims

1. A mechanism for retaining a smart card (16) while the smart card (16) is in use in an electronic device, the mechanism being **characterized by**
a clip (13) at an opening (12) of the electronic device (10), with a slit (14) to receive the smart card (16), the clip (13) comprising at least a first detent member (17, 18a, 20); and
a substantially V-shaped resilient retainer (15, 15a) dimensioned to engage against and to hold one portion of said smart card (16) while permitting contact in the electronic device with another portion of the smart card containing contacts for reading the smart card, said retainer (15, 15a) including at least one second detent member (18, 17a, 21) that snaps into engagement with the first detent member (17, 18a, 20) such that the retainer (15, 15a) is biased to firmly hold and protect the smart card (16) when the retainer (15, 15a), engaging the smart card (16), is snapped into place for using the smart card (16) in the electronic device (10).

2. The mechanism of claim 1 **characterized in that** said first detent member includes at least one projection (17) extending into said slit (14), and said second detent member includes at least one aperture (18) for receiving said projection.

3. The mechanism of claims 1 or 2 **characterized in that** said first detent member includes at least one aperture (18a), and said second detent member includes at least one projection (17a) for being received in said aperture.

4. The mechanism of one of the claims 1 to 3 **characterized in that** said first detent member includes an edge (20) of said clip (13) and said second detent member includes at least one rib (21) extending along a selected length of said retainer (15a).

5. The mechanism of any one of claims 1 through 3, further **characterized by** a spring (19) for biasing said resilient retainer open.

6. The mechanism of one of the claims 1 to 5, wherein the clip (13) is resilient and is configured to snap into the opening in the electronic device (10).

## Patentansprüche

1. Mechanismus zum Festhalten einer Smart Card (16), während die Smart Card (16) sich in Gebrauch in einem elektronischem Gerät befindet, **gekennzeichnet durch**
einen Clip (13) an der Öffnung (12) des elektronischen Geräts (10) mit einem Schlitz (14) zur Aufnahme der Smart Card (16), wobei der Clip (13) wenigstens ein erstes Festhalteteil (17, 18a, 20) enthält, und
einen im wesentlichen V-förmigen nachgiebigen Halter (15, 15a), der so bemessen ist, dass er einen Teil der Smart Card (16) erfasst und in einer Lage hält, wobei eine Berührung in dem elektronischen Gerät mit einem anderen Teil der Smart Card möglich ist, der Kontakte enthält zum Lesen der Smart Card, und der Halter (15, 15a) wenigstens ein zweites Festhalteteil (18, 17a, 20) enthält, das **durch** eine Schnappverbindung in Eingriff gelangt mit dem ersten Festhalteteil (17, 18a, 20), derart, dass der Halter (15, 15a) dafür vorgespannt ist, die Smart Card (16) fest zu halten und zu schützen, wenn der Halter (15, 15a), der die Smart Card (16) erfasst, zur Benutzung der Smart Card (16) in dem elektronischen Gerät (10) eingeschnappt wird.

2. Mechanismus nach Anspruch 1, **dadurch gekennzeichnet, dass** das erste Festhalteteil wenigstens einen Vorsprung (17) enthält, der sich in den Schlitz (14) erstreckt, und das zweite Festhalteteil wenigstens eine Öffnung (18) zur Aufnahme des Vorsprungs enthält.

3. Mechanismus nach Anspruch 1 oder 2, **dadurch gekennzeichnet, dass** das erste Festhalteteil wenigstens eine Öffnung (18a) enthält und das zweite Festhalteteil wenigstens einen Vorsprung (17a) zur Aufnahme in der Öffnung enthält.

4. Mechanismus nach einem der Ansprüche 1 bis 3, **dadurch gekennzeichnet, dass** das erste Festhalteteil eine Kante (20) des Clip (13) enthält und das zweite Festhalteteil wenigstens eine Rippe (21) enthält, die sich über eine gewählte Länge des Halters (15a) erstreckt.

5. Mechanismus nach einem der Ansprüche 1 bis 3, **gekennzeichnet durch** eine Feder (19) zur Vorspannung des nachgiebigen Halters in seine offene Stellung.

6. Mechanismus nach einem der Ansprüche 1 bis 5, wobei der Clip (13) nachgiebig und zum Einschnappen in die Öffnung des elektronischen Geräts (10) konfiguriert ist.

## Revendications

1. Mécanisme de retenue d'une carte à puce intelligente (16) alors que la carte à puce intelligente (16) est utilisée dans un dispositif électronique, le mécanisme étant **caractérisé par**
un clip (13) dans une ouverture (12) du dispositif électronique (10), avec une fente (14) pour recevoir la carte à puce intelligente (16), le clip (13) comprenant au moins un premier membre d'encliquetage (17, 18a, 20) ; et
un système de retenue résilient substantiellement en forme de V (15, 15a) dimensionné pour engager et maintenir une partie de ladite carte à puce intelligente (16) tout en permettant le contact dans le dispositif électronique avec une autre partie de la carte à puce intelligente contenant des contacts pour la lecture de la carte à puce intelligente, ledit système de retenue (15, 15a) incluant au moins un second membre d'encliquetage (18, 17a, 21) qui s'enclenche avec le premier membre d'encliquetage (17, 18a, 20) de sorte que le système de retenue (15, 15a) soit biaisé pour maintenir fermement et protéger la carte à puce intelligente (16) lorsque le système de retenue (15, 15a), engageant la carte à puce intelligente (16), est mis en place pour l'utilisation de la carte à puce intelligente (16) dans le dispositif électronique (10).

2. Mécanisme selon la revendication 1 **caractérisé en ce que** ledit premier membre d'encliquetage inclut au moins une projection (17) s'étendant dans ladite fente (14), et ledit second membre d'encliquetage inclut au moins une ouverture (18) pour la réception de ladite projection.

3. Mécanisme selon les revendications 1 ou 2 **caractérisé en ce que** ledit premier membre d'encliquetage inclut au moins une ouverture (18a), et ledit second membre d'encliquetage inclut au moins une projection (17a) pour la réception dans ladite ouverture.

4. Mécanisme de l'une des revendications 1 à 3 **caractérisé en ce que** ledit premier membre d'encliquetage inclut un bord (20) dudit clip (13) et ledit second membre d'encliquetage inclut au moins une nervure (21) s'étendant le long d'une longueur sélectionnée dudit système de retenue (15a).

5. Mécanisme de l'une des revendications 1 à 3, **caractérisé en outre par** un ressort (19) pour le biaisage dudit système de retenue résilient ouvert.

6. Mécanisme de l'une des revendications 1 à 5, où le clip (13) est résilient et configuré pour s'encliqueter dans l'ouverture du dispositif électronique (10).
